(19) Europäisches Patentamt
European Patent Office
Office européen des brevets

(11) Veröffentlichungsnummer: **0 219 708**
**A1**

(12) **EUROPÄISCHE PATENTANMELDUNG**

(21) Anmeldenummer: **86113139.9**

(51) Int. Cl.⁴: **C08G 63/64**

(22) Anmeldetag: **24.09.86**

(30) Priorität: **05.10.85 DE 3535663**

(43) Veröffentlichungstag der Anmeldung:
**29.04.87 Patentblatt 87/18**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Freitag, Dieter, Dr.**
**Hasenheide 10**
**D-4150 Krefeld(DE)**
Erfinder: **Tacke, Peter, Dr.**
**Brandenburger Strasse 12**
**D-4150 Krefeld(DE)**
Erfinder: **Bottenbruch, Ludwig, Dr.**
**Wöhlerstrasse 5**
**D-4150 Krefeld(DE)**
Erfinder: **Rathmann, Dietrich, Dr.**
**Alte Landstrasse 119**
**D-5090 Leverkusen(DE)**
Erfinder: **Röhr, Harry, Dr.**
**Zur Ville 21**
**D-5020 Frechen 4(DE)**

(54) **Aromatische Polyestercarbonate, Verfahren zu ihrer Herstellung und ihre Verwendung zur Herstellung von Formkörpern, Folien und Überzügen.**

(57) Polyestercarbonate mit niedrigem Carbonat-und hohem Estergehalt und einem niedrigen Iso-/Terephthalsäureeinheiten-Verhältnis besitzen eine verbesserte Wärmeformbeständigkeit bei etwa unveränderter Schmelzviskosität.

**EP 0 219 708 A1**

Xerox Copy Centre

# Aromatische Polyestercarbonate, Verfahren zu ihrer Herstellung und ihre Verwendung zur Herstellung von Formkörpern, Folien und Überzügen

Die Erfindung betrifft thermoplastisch verarbeitbare aromatische Polyestercarbonate auf Basis von Diphenolen, Iso-und Terephthalsäure und einem Kohlensäurederivat sowie gegebenenfalls Kettenabbrechern und/oder Verzweigungsmitteln mit niedrigem Gehalt an Isophthalsäureresten und hohem Anteil an Estergruppen. Die Erfindung betrifft auch ein Verfahren zur Herstellung dieser Polyestercarbonate and ihre Verwendung zur Herstellung von Formkörpern, Folien und Überzügen.

Aus der EP-A 36 080 ist bekannt, die Schmelzviskosität aromatischer Polyestercarbonate durch Verwendung $C_8$-$C_9$-Alkyl-substituierter aromatischer Endgruppen zu senken und damit die thermoplastische Verarbeitbarkeit zu verbessern.

Es hat sich gezeigt, daß die Wärmeformbeständigkeit aromatischer Polyestercarbonate mit steigendem Gehalt an Terephthalsäureeinheiten steigt; jedoch nimmt damit auch unerwünschterweise die Schmelzviskosität zu.

Überraschenderweise wurde nun gefunden, daß Polyestercarbonate mit niedrigem Carbonat-und hohem Estergruppengehalt bei niedrigem Iso-/Terephthalsäureinheiten-Verhältnis eine verbesserte Wärmeformbeständigkeit bei etwa unveränderter Schmelzviskosität besitzen.

Gegenstand der Erfindung sind also aromatische Polyestercarbonate auf Basis von Diphenolen, Iso-und Terephthalsäure, einem Kohlensäurederivat sowie gegenbenenfalls Kettenabbrechern und/oder Verzweigungsmitteln, dadurch gekennzeichnet, daß

(i) der Estergruppengehalt 76 bis 95, vorzugsweise 77 bis 90, insbesondere 78 bis 87, Mol-%, bezogen auf die Summe von Ester-und Carbonatgruppen, und

(ii) das Molverhältnis Iso-/Terephthalsäureeinheiten (5 bis 35)/(95 bis 65), vorzugsweise (6 bis 30)/(94 bis 70), insbesondere - (8 bis 20)/(92 bis 80) betragen.

Ein weiterer Gegenstand der Erfindung ist ein Verfahren zur Herstellung dieser Polyestercarbonate nach dem Zweiphasengrenzflächenverfahren, wonach man die Iso-und Terephthalsäuredichloride (oder deren Lösungen), gegebenenfalls Kettenabbrecher (gegebenenfalls in einem Lösungsmittel) und das gerührte Zweiphasengemisch enthaltend alkalische wäßrige Diphenolatlösung, Katalysatoren und ein Lösungsmittel für das aromatische Polyestercarbonat sowie Phosgen miteinander vereinigt und zur Reaktion bringt.

Weiterer Gegenstand der Erfindung ist die Verwendung der neuen Polyestercarbonate zur Herstellung von Formkörpern -vornehmlich nach dem Spritzgußverfahren, von Folien und Überzügen.

Bevorzugte Diphenole für die Herstellung der erfindungsgemäßen Polyestercarbonate sind Verbindungen der Formel

HO-Z-OH (I)

worin Z einen zweiwertigen ein-oder mehrkernigen aromatischen Rest mit 6 -30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

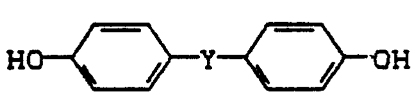

(II)

in der

Y eine Einfachbindung, einen Alkylen-oder Alkylidenrest mit 1 bis 7 C-Atomen, einen Cycloalkylen-oder Cycloalkylidenrest mit 5 -12 C-Atomen, -O-, -S-, $-\underset{\underset{O}{\|}}{S}-$, $-SO_2-$, oder $-\underset{\underset{O}{\|}}{C}-$ bedeutet,

sowie deren kernalkylierte und kernhalogenierte Derivate, z.B.

Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfoxide, Bis-(hydroxyphenyl)-sulfone und $\alpha,\alpha'$-Bis'(hydroxyphenyl)-diisopropylbenzole sowie deren kernalkylierte und kernhalogenierte Verbindungen. Diese und weitere geeignete Diphenole sind z.B. in den US-Patentschriften 3 028 365, 3 275 601, 3 148 172, 3 062 781, 2 991 273, 3 271 367, 2 999 835, 2 970 131 und 2 999 846, in den deutschen Offenlegungsschriften 1 570 704, 2 064 050, 2 063 052, 2 211 956, 2 211 957, der französischen Patentschrift 1 561 518 und in

der Monographie "H. Schnell, Chemistry and Physics of Polycarbonates, Interscience Publishers, New York, 1964" beschrieben.

Die wichtigsten Diphenole seien nachfolgend namentlich aufgezählt:

Bisphenol A = 2,2-Bis-(4-hydroxyphenyl)-propan, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenylsulfon sowie deren di-und tetrahalogenierten Derivate. Besonders bevorzugt ist Bisphenol A. Es können auch beliebige Mischungen der genannten Diphenole verwendet werden.

Die also Kettenabbrecher und damit zur Regelung des Molekulargewichts geeigneten Verbindungen sind bekannt und werden beispielsweise in der EP-A 8492 und den US-PS 4 438 255 und 4 330 663 beschrieben. Bevorzugte Kettenabbrecher sind monofunktionelle aromatische Hydroxylverbindungen, wie 4-Hydroxydiphenyl, p-Nonylphenol, 4-(1.1.3.3-Tetramethylenethyl)-phenol, Chlorkohlensäureester, wie Chlorkohlensäureethyl-und -phenylester, und aliphatische und aromatische Carbonsäurechloride, wie Stearinsäurechlorid und Naphthalincarbonsäurechloride. Besonders bevorzugt sind die in der EP-A 36 080 beschriebenen Kettenabbrecher, z.B. p-Isooctylphenol und p-Isononylphenol.

Sie werden in Mengen von 0,1 bis 10 Mol-%, vorzugsweise 0,3 bis 7 Mol-% (im Falle von Phenolen bezogen auf Diphenole, im Falle von Säurechloriden und Chlorkohlensäureestern bezogen auf Säuredichloride) verwendet.

Bevorzugte Verzweigungsmittel sind beispielsweise 3-oder mehrfunktionelle Carbonsäurechloride, wie Trimesinsäuretrichlorid, Cyanursäuretrichlorid, 3,3',4,4'-Benzophenontetracarbonsäuretetrachlorid, 1,4,5,8-Naphthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3-oder mehrfunktionelle Phenole, wie Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis-(4-hydroxy-phenyl)-cyclo-hexyl]-propan, 2,4-Bis-(4-hydroxyphenyl-isopropyl)-phenol, Tetra-(4-hydroxyphenyl)methan, 2,6-Bis-(2-hydroxy-5-methyl-benzyl)-4-methyl-phenyl, 2-(4-Hydroxyphenyl)-2-(2,4-dihydroxyphenyl)-propan, Tetra-(4-[4-hydroxyphenyl-isopropyl]-phenoxy)-methan, 1,4-Bis-[(4,4"-dihydroxytriphenyl)-methyl]-benzol, in Mengen von 0,01 bis 1,0 Mol-% (bezogen auf eingesetze Diphenole). Phenolische Verzweigungsmittel können mit den Diphenolen vorgelegt, Säurechlorid-Verzweigungsmittel können zusammen mit den Säuredichloriden eingetragen werden.

Die Herstellung der erfindungsgemäßen aromatischen Polyestercarbonate erfolgt vorzugsweise nach dem Phasengrenzflächenverfahren, das beispielsweise durch V. V. Korshak und S. V. Vinogradova in "Polyesters", Pergamon Press, 1965, S. 448, beschrieben ist. Die Polykondensation kann auch in einem Lösungsmittel in Gegenwart zumindest äquivalenter Mengen tertiärer Amine zum Binden des freigesetzten Halogenwasserstoffes durchgeführt werden. Dieses Verfahren ist z.B. in der DE-OS 2 714 544 beschrieben, hat jedoch keine Bedeutung erlangt, da die Abtrennung der großen Mengen tertiärer Base vom Produkt schwierig und aufwendig ist.

Die Herstellung kann auch durch Schmelzumesterung erfolgen; vgl. DE-AS 1 495 626.

Bei Anwendung des Phasengrenzflächenverfahrens werden die Diphenole in wäßrig-alkalischer Phase gelöst. In diese Lösung können zur Vermeidung von Verfärbungen der Polyestercarbonate geringe Mengen, wie beispielsweise 0,1 bis 1 Gew.-% (bezogen auf eingesetzte Diphenole), reduzierender alkalischer Substanzen, wie Natriumborhydrid oder Natriumsulfit, eingetragen werden.

Als Katalysatoren für die Polykondensationsreaktion können der wäßrig alkalischen Phase 0,01 bis 5 Mol-% (bezogen auf eingesetzte Diphenole) eines oder mehrerer tertiärer Amine und/oder quartärer Ammonium-und/oder Phosphoniumverbindungen zugesetzt werden.

Als Katalysatoren bevorzugte Ammonium-bzw. Phosphoniumverbindungen entsprechen der Formel

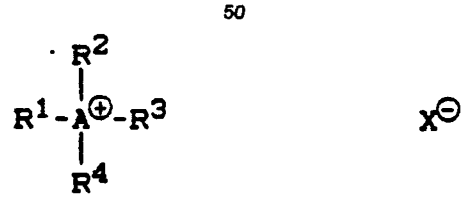

worin

A ein Stickstoff-oder Phosphoratom,

X Chlor oder Brom und

$R^1$, $R^2$, $R^3$, $R^4$ $C_1$-$C_{20}$-Alkyl, $C_6$-$C_{10}$-Cycloalkyl, $C_7$-$C_{30}$-Alkaryl oder -Aralkyl bedeuten, wobei zwei Substituenten zusammen für eine $C_4$-$C_{12}$-Alkylengruppe stehen können.

Bevorzugte tertiäre Amine entsprechen der Formel

$$\begin{array}{c} R^6 \\ | \\ R^5\text{-}N\text{-}R^7 \end{array}$$

worin $R^5$, $R^6$, $R^7$ $C_1$-$C_{20}$-Alkyl oder $C_6$-$C_{10}$-Cycloalkyl bedeuten, wobei auch zwei Substituenten zusammen für eine Alkylengruppe mit 4 bis 12 C-Atomen stehen können. Bevorzugt ist N-Ethyl-piperidin.

Als Lösungsmittel für die Durchführung des Phasengrenzflächenverfahrens können die von der Polycarbonatherstellung bekannten organischen Lösungsmittel, wie z.B. Dichlormethan, Chloroform, Tri-und Tetrachlorethylen, Tetrachlorethane, Chlorbenzol, Dichlorbenzole und Gemische dieser Verbindungen eingesetzt werden.

Die Herstellung der erfindungsgemäßen Polyestercarbonate erfolgt vorzugsweise unter intensivem Rühren bei Temperaturen von 0 bis 40, insbesondere 15 bis 30°C.

Die Isolierung der erfindungsgemäßen aromatischen Polyestercarbonate kann nach der von der Polycarbonatsynthese nach dem Zweiphasengrenzflächenverfahren bekannten Methode erfolgen. Hierbei wird die organische Phase abgetrennt, gewaschen und anschließend das Polyestercarbonat durch Eindampfen der Lösung isoliert, wobei als Endstufe des Aufarbeitungsprozesses vorzugsweise ein Ausdampfextruder benutzt wird. Das Produkt kann auch durch Kristallisation bzw. Gelierung aus der eingedampften Lösung ausgeschieden werden.

Sowohl der Ester-als auch der Carbonatanteil der erfindungsgemäßen aromatischen Polyestercarbonate kann in Form von Blöcken oder statistisch verteilt im Polyestercarbonat vorliegen. Bei Anwendung des Phasengrenzflächenverfahrens kann zur Herstellung von Polyestercarbonaten mit definierten Polyesterblöcken beispielsweise zunächst eine alkalische wäßrige Lösung der aromatischen Dicarbonsäuredichloride zu einem Vorkondensat mit phenolischen OH-End gruppen umgesetzt und das Vorkondensat durch anschließende Einleitung von Phosgen zum Polyestercarbonat weiterkondensiert werden. Die Länge der Polyesterblöcke läßt sich durch geeignete Wahl des Molverhältnisses von Diphenol und Säurechlorid einstellen.

Analog erhält man Polyestercarbonate mit Polycarbonatblöcken, wenn oligomere Carbonate mit phenolischen OH-Endgruppen mit den aromatischen Dicarbonsäuredichloriden zur Reaktion gebracht werden.

Polyestercarbonate mit statistischer Verteilung der Ester-und Carbonat-Gruppierungen sind durch gleichzeitige Dosierung von Säuredichlorid und Phosgen zur Diphenolat-Lösung zugänglich.

Die erfindungsgemäß gegebenenfalls zu verwendenden Kettenabbrecher können, soweit es sich um phenolische Verbindungen handelt, dem Reaktionsgemisch vor Beginn oder während der Reaktion zugesetzt werden. Es muß jedoch noch genügend Säurechlorid und/oder Phosgen zur Verfügung stehen, damit sie reagieren und die Kette begrenzen können; z.B. kann der Kettenabbrecher zusammen mit dem Diphenol eingesetzt werden, in der Lösung der Chloride der aromatischen Dicarbonsäuren enthalten sein oder dem Reaktionsgemisch nach Herstellung eines Vorkondensates zugesetzt werden.

Sofern man als Kettenabbrecher Säurechloride oder Chlorkohlensäureester verwendet, werden sie vorzugsweise gemeinsam mit dem aromatischen Dicarbonsäuredichlorid und/oder Phosgen eingesetzt.

Diese Kettenabbrecher können dem Reaktionsgemisch auch noch zu einem Zeitpunkt zugesetzt werden, wenn die Chloride der Dicarbonsäuren und das Phosgen schon weitgehend oder vollständig reagiert haben.

Die erfindungsgemäßen aromatischen Polyestercarbonate besitzen in der Regel relative Lösungsviskositäten von 1,18 bis 2,0, insbesondere 1,2 bis 1,5, gemessen an einer Lösung von 0,5 g in 100 ml Lösung bei 25°C (Lösungsmittel = Gemisch aus gleichen Gewichtsteilen Phenol und o-Dichlorbenzol). Sie können Stabilisatoren, wie beispielsweise Antioxidantien, UV-Stabilisatoren, Fließ- und Entformungshilfsmittel oder andere Additive sowie Füllstoffe wie Glasfasern, Glaskugeln, Asbest-oder Kohlenstoffasern, Kieselgur, Kaolin, Mineralfasern, Gesteinsmehl und Pigmente enthalten.

Die nach dem erfindungsgemäßen Phasengrenzflächenverfahren erhaltenen aromatischen Polyestercarbonate werden nach der Extrusion als einheitliches Granult erhalten und können durch Spritzgiessen zu Formkörpern verarbeitet werden. Sie sind ebenfalls zur Herstellung von Folien und Überzügen geeignet.

## Beispiele

Alle Polyestercarbonate auf Basis Bisphenol A (BPA), als Kettenabbrecher 3,5 Mol-%, bezogen

auf BPA, Isooctylphenol, statistische Verteilung

Vergleichsbeispiel 1

Polyestercarbonat mit 50 Gew.-% Esteranteil, äquimolaren Mengen Iso-und Terephthalsäure

2,736 kg BPA (12 Mol), 1,5 l 45 gew.-%ige Natronlauge, 10 ml Triethylamin und 8,4 g Natriumborhydrid wurden in einem Gemisch aus 36 l Wasser und 22 l Dichlormethan bis zur vollständigen Lösung des BPA gerührt, sodann gleichzeitig eine Lösung aus je 508 g Iso-und Terephthalsäuredichlorid (5 Mol) und 86,7 g p-Isooctylphenol (3,5 Mol-%) in 3 l Dichlormethan innerhalb von 10 Minuten zugegeben und 1 kg Phosgen innerhalb von 20 Minuten eingeleitet. Zur Nachreaktion wurde 1 Stunde nachgerüht, der pH-Wert der wäßrigen Phase durch Nachdosierung von NaoH bei 12 -13 gehalten.

Nach Abtrennung der wäßrigen Phase wurde die organische Phase zunächst mit verdünnter Phosphorsäure, dann mit Wasser salzfrei gewaschen und ca. 50% des Dichlormethans unter Normaldruck abdestilliert. Die verbliebene Lösung wurde mt 15 l Chlorbenzol verdünnt und die Abdestillation des Dichlormethans fortgesetzt, bis die Sumpftemperatur ca. 80°C betrug, das Polyestercarbonat dann im Vakuumextruder bei 320°C vom Chlorbenzol befreit, als Strang abgezogen und granuliert. Das Granulat besaß eine relative Lösungsviskosität $\eta$rel von 1,294.

Vergleichsbeispiel 2

Polyestercarbonat mit 50 Gew,-% Esteranteil, 80 % Terephthalsäure, 20 % Isophthalsäure

Es wurde analog Vergleichsbeispiel 1 verfahren, jedoch 812 g Terephthalsäuredichlorid und 204 g Isophthalsäuredichlorid eingesetzt, $\eta$rel: 1,297.

Beispiel 1 (erfindungsgemäß)

Polyestercarbonat mit 85 Gew.-% Esteranteil, 93 % Tere-, 7 % Isophthalsäure

2,28 kg (10 Mol) BPA, 1,83 kg (20,6 Mol) 45 gew.-%ige Natronlauge wurden mit 61 l Wasser, 27 l Dichlormethan und 14 ml N-Ethylpiperidin bis zur Lösung des BPA gerührt, dann innerhalb 10 Minuten gleichzeitig 200 g Phosgen (2 Mol) und eine Lösung von 1511 g (7,44 Mol) Terephthalsäuredichlorid, 114 g (0,56 Mol) Isophthalsäuredichlorid und 82,1 g (3,5 Mol-%) p-Isooctylphenol in 3,5 l Dichlormethan zugegeben. Anschließend wurde 30 Minuten bei 21°C und pH 11 gerührt, dann weitere 200 g (ca. 2 Mol) Phosgen in 25 Minuten bei pH 10 -13 eingeleitet und bei pH 13 noch 30 Minuten nachgerührt.

Nach Trennung der Phasen wurde die organische Phase mit verdünnter Phosphorsäure, dann mit Wasser gewaschen und mit 12 l Chlorbenzol vermischt. Nach Abdestillieren von ca. 10 % des in der Lösung vorhandenen Dichlormethans gelierte das Polyestercarbonat aus. Das viskose Gemisch wurde auf Bleche abgelassen und im Trockenschrank bei 120°C und ca. 20 mbar vom Lösungsmittel befreit. $\eta$rel: 1,319.

Beschreibung der Meßmethode zur Beurteilung der Fließfähigkeit der Polyestercarbonate

Auf einer Spritzgußmaschine wurden unter einem Druck von 1050 bar bei 320°C spiralförmige Streifen mit den Abmessungen 2 x 20 mm hergestellt, wobei der Querschnitt des Stangenangusses 10 mm² betrug.

Die Länge der resultierenden Fließspirale ist ein Maß für die Fließfähigkeit des extrudierten Polyestercarbonats.

Die Wärmeformbeständigkeit wurde nach Vicat, Methode B, DIN 53 460, bestimmt.

Die Eigenschaften der Produkte sind in der folgenden Tabelle verglichen.

| Beispiel | Wärmeformbeständigkeit nach Vicat B [°C] | Länge der Fließspirale [cm] |
|---|---|---|
| Vergl. 1 | 169 | 19,8 |
| Vergl. 2 | 175 | 15,3 |
| Beispiel 1 | 194 | 19,6 |

Beispiel 1 zeigt, daß es gelungen ist, durch hohen Terephthalsäureanteil im Polyestercarbonat die Wärmeformbeständigkeit zu verbessern und die Fließfähigkeit der Schmelze trotz des hohen Terephthalsäuregehaltes auf hohem Niveau zu halten.

## Ansprüche

1. Aromatische Polyestercarbonate auf Basis von Diphenolen, Iso-und Terephthalsäure, einem Kohlensäurederivat sowie gegebenenfalls Kettenabbrechern und/oder Verzweigungsmitteln, durch gekennzeichnet, daß

(i) der Estergruppengehalt 76 bis 95 Mol-%, bezogen auf die Summe von Ester-und Carbonatgruppen, und

(ii) das Molverhältnis Iso-/Terephthalsäureeinheiten (5 bis 35)/(95 bis 65) betragen.

2. Polyestercarbonate nach Anspruch 1, dadurch gekennzeichnet, daß der Estergruppengehalt 77 bis 90 Mol-% beträgt.

3. Polyestercarbonate nach Anspruch 1, dadurch gekennzeichnet, daß der Estergruppengehalt 78 bis 87 Mol-% beträgt.

4. Polyestercarbonate nach Ansprüchen 1 -3, dadurch gekennzeichnet, daß das Molverhältnis Iso-/Terephthalsäureeinheiten (6 bis 30)/(94 bis 70) beträgt.

5. Polyestercarbonate nach Ansprüchen 1 -3, dadurch gekennzeichnet, daß das Molverhältnis Iso-/Terephthalsäureeinheiten (8 bis 20)/(92 bis 80) beträgt.

6. Polyestercarbonate nach Ansprüchen 1 -5, dadurch gekennzeichnet, daß das verwendete Diphenol Bisphenol A ist.

7. Verfahren zur Herstellung der Polyestercarbonate nach Ansprüchen 1 -6 nach dem Zweiphasengrenzflächenverfahren, dadurch gekennzeichnet, daß man die Terephthal-und Isophthalsäuredichloride (oder deren Lösungen), gegebenenfalls Kettenabbrecher (gegebenenfalls in einem Lösungsmittel) und das gerührte Zweiphasengemisch enthaltend alkalische wäßrige Diphenolatlösung, Katalysatoren und ein Lösungsmittel für das aromatische Polyestercarbonat sowie Phosgen miteinander vereinigt und zur Reaktion bringt.

8. Verfahren nach Anspruch 7, dadurch gekennzeichnet, daß man bei einer Temperatur von 0 bis 40°C arbeitet.

9. Verwendung der Polyestercarbonate nach Ansprüchen 1 - 6 zur Herstellung von Formkörpern, Folien und Überzügen.

Europäisches Patentamt

# EUROPÄISCHER RECHERCHENBERICHT

Nummer der Anmeldung

EP 86 11 3139

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 462 454 (BOSNYAK)<br>* Patentansprüche 1-7 *<br>--- | 1-6,9 | C 08 G 63/64 |
| X | US-A-3 395 119 (J. BLASCHKE et al.)<br>* Patentansprüche 1,5,6 *<br>--- | 1-6,9 | |
| X | EP-A-0 050 847 (DOW CHEMICAL CO.)<br>* Patentansprüche 1,2 *<br>--- | 1-6,9 | |
| A | EP-A-0 150 455 (GENERAL ELECTRIC)<br>* Patentansprüche 1-7 *<br>--- | 1-6,9 | |
| A | EP-A-0 010 840 (MITSUBISHI)<br>* Patentansprüche 1-12 *<br>--- | 1-9 | RECHERCHIERTE SACHGEBIETE (Int. Cl.4) |
| A | GB-A-2 047 724 (GENERAL ELECTRIC)<br>* Patentansprüche 1-13; Beispiele 7,8 *<br>--- | 1-6,9 | C 08 G |
| A | GB-A-2 047 723 (GENERAL ELECTRIC)<br>* Patentansprüche 1-12; Beispiel 7 *<br>--- -/- | 1-6,9 | |

Der vorliegende Recherchenbericht wurde für alle Patentansprüche erstellt.

| Recherchenort | Abschlußdatum der Recherche | Prüfer |
|---|---|---|
| DEN HAAG | 15-01-1987 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

# EUROPÄISCHER RECHERCHENBERICHT

Nummer der Anmeldung

EP 86 11 3139

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 134 898 (GENERAL ELECTRIC)<br>* Patentansprüche 1-7; "Control 1", Seite 6 *<br>----- | 1-6,9 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 15-01-1987 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82